# EUROPEAN PATENT SPECIFICATION

(11) **EP 2 556 036 B1**
(45) Date of publication and mention of the grant of the patent: **15.07.2020**
(21) Application number: 11715362.7
(22) Date of filing: 07.04.2011
(51) Int. Cl.: C03C 17/42, B65D 23/08, C03C 17/00

(54) **IMPROVING ADHESION OF ORGANIC COATINGS ON GLASS**
VERBESSERTE ANHAFTUNG VON ORGANISCHEN BESCHICHTUNGEN AUF GLAS
AMÉLIORATION DE L'ADHÉSION DE REVÊTEMENTS ORGANIQUES SUR LE VERRE

(30) Priority: 07.04.2010 US 755458
(43) Date of publication of application: 13.02.2013
(73) Proprietor: Owens-Brockway Glass Container INC., Perrysburg, OH 43551 (US)
(72) Inventor: REMINGTON, Michael, P., Jr., Toledo OH 43615 (US); MARSH, Dennis, R., Ottawa Hills OH 43606 (US)
(74) Representative: Mergel, Volker
(86) International application number: PCT/US2011/031595
(87) International publication number: WO 2011/127294

(56) References cited:
- WO-A1-81/02572
- WO-A1-81/02572
- JP-A- 10 060 374
- JP-A- 2005 177 542
- US-A- 4 030 904
- US-A- 4 056 208
- US-A- 4 056 208
- US-A- 5 939 188

## Description

The present disclosure is directed to coating processes, including methods and materials for coating glass, and to improving adhesion of organic coatings on the glass.

### Background and Summary of the Disclosure

Various processes have been developed to apply coatings to glass substrates for different purposes, including decoration, adhesion and glass strengthening for damage prevention. For example, U.S. Patent 3,522,075 discloses a process for coating a glass container in which the container is formed, coated with a layer of metal oxide such as tin oxide, cooled through a lehr, and then coated with an organopolysiloxane resin-based material over the metal oxide layer.

JP 2005-177542 A discloses glass bottles hot-end coated with tin oxide, onto which a colloidal silicate is applied followed by a mixed layer comprising an organofunctional silane coupling agent, silicone and polyethylene.

Additionally, US 5,939,188 A discloses a glass substrate as such which is hot-end coated with indium tin oxide. A layer of silica is applied to the glass substrate, subsequently the substrate is coated with a primer containing an organofunctional silane and coated with two layers of polyurethane.

A general object of the present disclosure, in accordance with one aspect of the disclosure, is to increase bonding between glass coatings for better adhesion of organic coatings to a product thereby improving product appearance, ultraviolet protection, durability and/or the like.

The present disclosure embodies a number of aspects that can be implemented separately from or in combination with each other. The invention is defined in independent claims 1 and 7, dependent claims refer to preferred embodiments.

A method of coating a glass container in accordance with one aspect of the disclosure includes the steps of depositing a silicon-based inorganic oxide on an exterior surface of the glass, then applying an organofunctional silane to the glass over the inorganic oxide and then applying an organic coating to the glass over the organofunctional silane. In another aspect, the present invention provides a glass container that includes a glass substrate, an inorganic oxide coating over the substrate wherein said inorganic oxide is silica (SiO₂), an organofunctional silane coating over the inorganic oxide coating, and including an organic coating over said organounctional silane coating.

### Brief Description of the Drawings

The disclosure, together with additional objects, features, advantages and aspects thereof, will be best understood from the following description, the appended claims and the accompanying drawings, in which:
FIG. 1 is an elevational view of a glass container in accordance with an exemplary embodiment of the present disclosure; and
FIG. 2 is an enlarged sectional view of the glass container, taken from circle 2 of FIG. 1.

### Detailed Description of Preferred Embodiments

In general, products and processes will be described using one or more examples of exemplary embodiments of materials and steps to improve adhesion of organic coatings on glass. The example embodiments will be described with reference to use for glass containers.

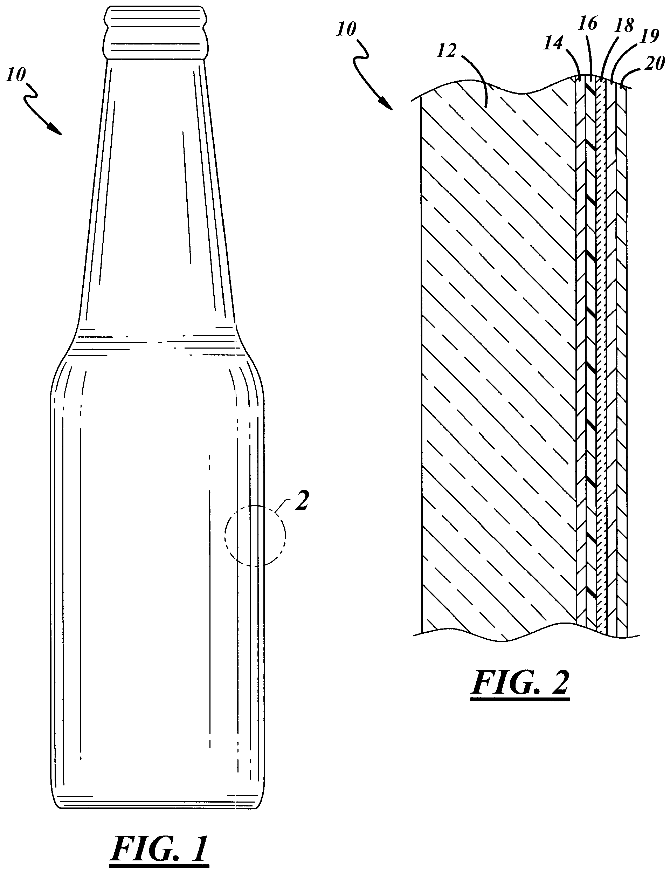

Referring now to the drawings, FIG. 1 illustrates an exemplary embodiment of a glass container 10 (e.g., glass bottle, jar, or the like) that may be produced in accordance with exemplary embodiments of a manufacturing process presently disclosed hereinbelow. FIG. 2 illustrates that the glass container 10 preferably includes a glass substrate 12, a hot end coating 14 on the substrate, a cold end coating 16 over the hot end coating 14, an inorganic oxide coating 18 over the cold end coating 16, an organofunctional silane coating 19 over the inorganic oxide coating 18, and an organic coating 20 over the organofunctional silane coating 19.

Although the various coatings 14-20 are shown as adjacent layers overlying one another sequentially, one or more of the coatings may penetrate into or even through one or more of the other coatings. Accordingly, the various coatings 14-20 may be fairly described as being applied generally to the glass container 10, regardless of how or to what extent any given coating contacts any of the other coatings and/or the substrate 12. Similarly, when a material is described as being applied to an exterior surface of the glass container 10, the material may contact one or more of the coatings 14-20 and/or the glass substrate 12 itself.

Glass containers can be produced in any suitable manner. This typically would involve a "hot end" including one or more melting furnaces, forming machines, and annealing lehrs, and a "cold end" after the annealing lehr(s) and including inspection equipment and packaging machines. Accordingly, a "hot end coating" is a coating applied at the hot end of a glass container manufacturing process before passage through the annealing lehr, and a "cold end coating" is a coating applied at the cold end of the glass container manufacturing process during or after passage through the annealing lehr.

After forming glass containers, but prior to annealing, the glass containers may be hot-end coated in any suitable manner. For example, the glass containers may be coated with one or more metal oxides, for instance, under a hood between the forming machines and an annealing lehr. The hot-end coating 14 may include oxides of tin, titanium, vanadium, zirconium, and/or the like.

The glass containers then may be annealed in any suitable manner, such as in an annealing lehr.

At or downstream of the annealing operation, the glass containers may be cold-end coated in any suitable manner. For example, the glass containers may be coated with the cold end coating 16, which may be a protective organic coating applied downstream or at an end of the annealing lehr. The cold end coating may include polyethylene, stearate, oleic acid, or any other suitable material(s).

After the cold end coating is or coatings are applied, the glass containers may be inspected for any suitable characteristics and in any suitable manner. For example, the glass containers may be manually or automatically inspected for cracks, inclusions, surface irregularities, hot end and/or cold end coating properties, and/or the like.

The inorganic oxide coating 18 is applied to exterior surfaces of the glass containers in any suitable manner and, preferably, after inspection. In one embodiment, one or more inorganic oxides may be deposited on the glass containers, for example, by flame pyrolysis. The inorganic oxide may include a reactive silica, for example, SiO₂. Precursors to the inorganic oxide may be delivered as a vapor, an atomized liquid, an atomized solution, and/or the like. Suitable precursors may include one or more of the following compounds: tetraethoxy silane (TEOS), hexamethyldisiloxane (HMDSO), hexamethyldisilazane (HMDSA), R₄Si (where R is an alkyl or aryl group containing seven or less carbon atoms), RaSiX₄₋ₐ (where R is an alkyl or aryl group containing seven or less carbon atoms and X is a halide, alkoxide, aryloxide, or amide group), and/or SiX₄ (where X is a halide, alkoxide, aryloxide, or amide group). Those of ordinary skill in the art will recognize that the thickness of the inorganic oxide coating 18 may be application specific and may be determined by trial and error. In an exemplary glass container embodiment, the thickness may be between 100 and 1000 Angstroms. The manufacturing speed for the inorganic coating step may be about 50 containers per minute (cpm) to about 600 cpm. In any case, the deposition of the inorganic oxide results in the inorganic oxide coating 18, which presents a highly reactive surface with increased bonding sites for an organofunctional silane, which may be applied, for example, as described below.

After the inorganic oxide is applied, the organofunctional silane coating 19 is applied to the glass containers in any suitable manner to facilitate adhesion of the subsequent organic coating 20. Because the inorganic oxide coating 18 provides increased bonding sites for the organofunctional silane coating 19, more organofunctional silane per unit area can be retained on the glass containers than otherwise would in the absence of the deposited inorganic oxide coating 18. In turn, and as will be described below, the more organofunctional silane that is retained on the glass containers, the more the organic coating 20 will adhere to the glass containers than otherwise would in the absence of the inorganic oxide and organofunctional silane coatings 18, 19.

The organofunctional silane coating 19 may be applied as a liquid or aqueous solution, for example, by spraying, rolling-on, brushing, dipping, and/or any other suitable application techniques. The chemistry of the organofunctional silane coating 19 may be chosen based on the chemistry of the organic coating 20 applied over the organofunctional silane coating 19. For example, if the organic coating 20 is a radiation curable material based on acrylate chemistry, then an appropriate organofunctional silane may contain an acrylate or methacrylate functionality. Those of ordinary skill in the art will recognize that the thickness of the organofunctional silane coating 19 may be application specific and may be determined by trial and error. In an exemplary glass container embodiment, the coating 19 may include one or two applications or layers. The manufacturing speed for the organofunctional silane coating step may be about 50 containers per minute (cpm) to about 600 cpm.

After the organofunctional silane is applied, the organic coating 20 is applied to the glass contain ers in any suitable manner, for example, for decoration, ultraviolet protection, durability, and/or the like. The organic coating 20 may be applied by spraying, dipping, powder coating, or the like. The organic coating 20 may be solvent-borne, water-borne, 100% solids, or the like. The organic coating 20 may be based on one or more of a variety of polymers including acrylates, epoxies, urethanes, and/or the like.

After applying the organic coating 20, the coating 20 may be cured in any suitable manner. The organic coating 20 may be a curable coating, for example, a radiation-curable organic coating cured by any suitable type of radiation like, for instance, ultraviolet, electron beam, or the like. In another embodiment, the organic coating 20 may be a thermally-curable coating cured by convection oven, infrared lamps, or the like. The curing step may be used to facilitate good bonding between the organic coating 20 and the organofunctional silane.

After curing, the glass containers may be packaged in any suitable manner.

Contrary to conventional wisdom, it is possible to produce glass containers with effective bonding of organic coatings thereto without having to resort to undesirable process steps. Conventionally, it has been understood that organic coatings do not adhere well to glass containers having been treated with hot and/or cold end coatings, and that flame, corona or plasma energy must be applied to the glass containers to achieve possible adhesion of the organic coating thereto.

In contrast, the application of the inorganic oxide coating of the presently disclosed method produces a highly reactive silica surface that allows increased organofunctional silane bonding per unit area, which in turn leads to increased adhesion of the organic coating to the glass containers. It is supposed that the organofunctional silane may facilitate adhesion of the organic coating 20 to the glass containers via strong bonding, perhaps via covalent bonds, of the organofunctional silane with both of the inorganic oxide coating 18 and the organic coating 20. In any event, a concomitant increase in durability of the organic coating can be achieved, thereby improving one or more of product appearance, adhesion, ultraviolet protection, durability, and/or the like.

Laboratory testing was undertaken to illustrate the improvement provided by the present disclosure. A description of the test and results follow.

Glass bottles with SnO₂/polyethylene coatings were prepared with various exterior surface conditions, and then compared in terms of average adhesion strength. Below, preparation of each of the example bottles is described, followed by a table comparing adhesion results.

A first set of glass bottles included only a SnO₂/polyethylene coating and was otherwise non-treated before application of the organic coating.

A second set of glass bottles included a SnO₂/polyethylene coating and was further subjected to flame treatment with a gas composed of 35% propane and 65% butane by weight. Distance between the flame jet and the exterior surfaces of the bottles was about 15 mm, bottle rotation speed was about 100 rpm, and treatment time was about 60 seconds including two trips (forth and back) across the bottle. The bottle surface temperature after the flame pretreatment was about 220-240 °F, and the flame temperature at the bottle surface was about 1,800 °F.

A third set of glass bottles included a SnO₂/polyethylene coating and was further subjected to corona treatment using a corona surface treater model BD-80 from Electro-Technic Products, of Chicago, IL. The output voltage was set to maximum scale of about 250 kV, with a distance between the treater electrode and the bottle surfaces of about 3 to 5 mm. Bottle rotation speed was about 100 rpm, and the treatment duration was about 3 minutes.

A fourth set of glass bottles included a SnO₂/polyethylene coating and was further subjected to plasma treatment using argon. The treatment included an argon flow rate of about ten l/min, arc voltage of about 20 V DC, arc current of about 100 A, and the distance between the plasma jet and the bottle surface was set to about 15 mm. Bottle rotation speed was about 100 rpm, with a treatment time of about 80 seconds, including two trips (forth and back) across the bottle.

A fifth set of glass bottles included a SnO₂/polyethylene coating, with an organofunctional silane coating applied thereto.

A sixth set of glass bottles included a SnO₂/polyethylene coating and was further subjected to the flame treatment described above, with an organofunctional silane coating applied thereto.

A seventh set of glass bottles was prepared in accordance with the present invention, including a SnO₂/polyethylene coating, an inorganic oxide coating, an organofunctional silane coating, and an organic coating. The inorganic oxide coating was applied using a PYROSIL brand professional kit available from Bohle America, Inc. of Charlotte, NC. The distance between the pyrolytic flame and the bottle surfaces was about 15 mm, bottle rotation speed was about 100 rpm, with a treatment time of about 80 seconds. The bottle temperature after treatment was about 220°F (about 104°C). The bottle temperature during silane deposition was about 90 to 120°F (about 32 to 49°C), and the silane was deposited with a brush using about one ml of silane and took about thirty seconds to complete. The silane was aged after deposition for about ten minutes.

For all sets of glass bottles, the organic coating was applied by spraying, using a RECORD 2200 brand spray gun with a gravity flow cup available from La Ditta GAV of Italy. The spray gun included a nozzle diameter of about 1.5 mm, with an air pressure of about 4 bar. The coating application time was about 5 to 25 seconds, and bottle rotation speed was about 60 to 65 rpm. The distance between the bottles and the spray gun was about 30 cm, and the application rate was about 0.4 to 1.3 g per bottle (on average 0.8 g per bottle).

All sets of glass bottles were allowed to dry at room temperature of about 15.5 to 21°C (about 60 to 70°F) and humidity of about 30 to 50% for about 30 to 35 seconds.

Then all sets of glass bottles were exposed to infrared drying for about 120 to 150 seconds. An infrared dryer used 1 kW of reflector power, and the distances between the reflector tube and the bottle surfaces ranged from about 9 cm to about 14 cm. Bottle temperature at the end of the infrared drying was about 76.7 to 82.2°C (about 170 to 180°F).

Thereafter, the organic coatings of the glass bottles were ultraviolet radiation cured for about 15 seconds. Bottle rotation speed was about 60 to 65 rpm, a distance between an ultraviolet lamp and the bottle surfaces was about 6 cm, irradiance was set to about 1200 mW/cm2, and ultraviolet dosage was about 9000 mJ/cm2 (UV-A and UV-B). Two 3000 Watt UV lamps were used: model DRTI-3000A, available from Razryad Ltd, of Zelenograd, Russia.

All sets of bottles were measured for adhesion. Adhesion measurements were taken on roughly 2.5 cm x 2.5 cm samples with a custom built system consisting of a load cell (Honeywell SENSOTEC brand model 102) and a pneumatic cylinder. A 4.8 mm diameter dolly shaped to the curvature of the bottles was glued to the surfaces thereof using a universal cyanoacrylate adhesive (UCA), for example, TRAMEL UCA. A pull strength load was incrementally applied until destruction occurred. A table of results follows.

**TABLE 1**

| **Bottle Set** | **Average Adhesion Strength (MPa)** |
|---|---|
| First - non-treated | 6.1 |
| Second - flame treated | 4.6 |
| Third - corona treated | 1.4 |
| Fourth - plasma treated | 3.3 |
| Fifth - organofunctional silane treated | 8.4 |
| Sixth - flame and silane treated | 10.6 |
| Seventh - inorganic oxide + silane | 17.2 |

Therefore, the example of the presently disclosed method according to the invention results in an adhesion strength that is about two to three times greater than other surface treatments on a SnO₂/polyethylene surface of a glass container.

There thus has been disclosed methods of coating glass containers and methods of manufacturing glass containers that at least partially satisfy one or more of the objects and aims previously set forth. The disclosure has been presented in conjunction with several exemplary embodiments, and additional modifications and variations have been discussed.

## Claims

1. A method of coating a glass container, which includes the steps of:
(a) depositing a inorganic oxide on an exterior surface of a glass container substrate (12),
(b) following said step (a), applying an organofunctional silane to the glass container over the inorganic oxide, and then
(c) applying an organic coating (20) to the glass container over the organofunctional silane,
wherein said inorganic oxide is a silicon-based inorganic oxide.

2. The method set forth in claim 1 wherein said step (a) is carried out by flame pyrolysis.

3. The method set forth in claim 2 further including the step of: (d) curing said organic coating (20).

4. The method set forth in claim 3 including, prior to said step (a), at least one additional step of at least one of applying a hot-end coating (14) to the glass container substrate or applying a cold end coating (16 or 18 or 19) to the glass container substrate.

5. The method set forth in claim 4 wherein said hot-end coating is SnO₂.

6. The method set forth in claim 1 wherein said silicon-based inorganic oxide is SiO₂.

7. A glass container that includes a glass substrate (12), an inorganic oxide coating (18) over the substrate, an organofunctional silane coating (19) over the inorganic oxide coating, and including an organic coating (20) over said organofunctional silane coating (19), and wherein said inorganic oxide is silica (SiO₂).

## Patentansprüche

1. Verfahren zum Beschichten eines Glasbehälters, mit folgenden Schritten:
(a) Abscheiden eines anorganischen Oxids auf einer Außenseite eines Glasbehältersubstrats (12),
(b) nach Schritt (a), Aufbringen eines organofunktionellen Silans auf den Glasbehälter über dem anorganischen Oxid und danach
(c) Aufbringen einer organischen Beschichtung (20) auf den Glasbehälter über dem organofunktionellen Silan,
wobei das anorganische Oxid ein anorganisches Oxid auf Siliziumbasis ist.

2. Verfahren nach Anspruch 1, wobei Schritt (a) mittels Flammpyrolyse erfolgt.

3. Verfahren nach Anspruch 2, ferner mit folgendem Schritt:
(d) Härten der organischen Beschichtung (20).

4. Verfahren nach Anspruch 3, wobei dieses vor Schritt (a) mindestens einen zusätzlichen Schritt zum Aufbringen einer Beschichtung (14) am heißen Ende auf das Glasbehältersubstrat oder zum Aufbringen einer Beschichtung (16 oder 18 oder 19) am kalten Ende auf das Glasbehältersubstrat umfasst.

5. Verfahren nach Anspruch 4, wobei die Beschichtung am heißen Ende SnO₂ ist.

6. Verfahren nach Anspruch 1, wobei das anorganische Oxid auf Siliziumbasis SiO₂ ist.

7. Glasbehälter mit einem Glassubstrat (12), einer Beschichtung aus anorganischem Oxid (18) auf dem Substrat, einer Beschichtung aus organofunktionellem Silan (19) über der Beschichtung aus anorganischem Oxid und mit einer organischen Beschichtung (20) über der Beschichtung aus organofunktionellem Silan (19), und
wobei das anorganische Oxid Siliciumdioxid (SiO₂) ist.

## Revendications

1. Procédé de revêtement d'un récipient en verre, qui comporte les étapes suivantes :
(a) déposer un oxyde minéral sur une surface extérieure d'un support (12) de récipient en verre,
(b) après avoir effectué ladite étape (a), appliquer un silane organo-fonctionnel sur le récipient en verre, par-dessus l'oxyde minéral,
(c) et enfin appliquer un revêtement (20) organique sur le récipient en verre, par-dessus le silane organo-fonctionnel,
étant entendu que ledit oxyde minéral est un oxyde minéral à base de silicium.

2. Procédé selon la revendication 1, dans lequel on effectue ladite étape (a) par pyrolyse à la flamme.

3. Procédé selon la revendication 2, comportant par ailleurs l'étape suivante :
(d) faire durcir ledit revêtement (20) organique.

4. Procédé selon la revendication 3, comportant, préalablement à ladite étape (a), au moins une étape supplémentaire consistant à effectuer au moins une des opérations suivantes : appliquer un revêtement (14) à chaud sur le support de récipient en verre, ou appliquer un revêtement (16 ou 18 ou 19) à froid sur le support de récipient en verre.

5. Procédé selon la revendication 4, dans lequel ledit revêtement à chaud est du dioxyde d'étain (SnO₂).

6. Procédé selon la revendication 1, dans lequel ledit oxyde minéral à base de silicium est de la silice (SiO₂).

7. Récipient en verre qui comporte un support (12) de verre, un revêtement (18) d'oxyde minéral recouvrant le support, un revêtement (19) de silane organo-fonctionnel recouvrant le revêtement d'oxyde minéral, et comportant un revêtement (20) organique recouvrant ledit revêtement (19) de silane organo-fonctionnel, et dans lequel ledit oxyde minéral est de la silice (SiO₂).
